# EUROPEAN PATENT APPLICATION

(11) **EP 4 494 738 A1**
(43) Date of publication of application: **22.01.2025**
(21) Application number: 24168293.9
(22) Date of filing: 03.04.2024
(51) Int. Cl.: B01D 53/04

(54) **AMMONIA ADSORPTION TOWER DRIVING CONTROL DEVICE AND CONTROL METHOD USING THE SAME**

(30) Priority: 21.07.2023 KR 20230095511
(71) Applicant: SK Innovation Co., Ltd., Seoul 03188 (KR)
(72) Inventor: KIM, Jae Jeong, 34124 Daejeon (KR); PARK, Chan Saem, 34124 Daejeon (KR); BAE, Sun Hyuk, 34124 Daejeon (KR)
(74) Representative: Prüfer & Partner mbB Patentanwälte · Rechtsanwälte

(57) **Abstract**

An ammonia adsorption tower driving control device according to the present disclosure includes: a sensor unit configured to measure an internal state of an adsorption tower; a memory configured to store one or more instructions; a processor configured to execute one or more instructions stored in the memory; and a driving unit configured to drive the adsorption tower according to an adsorption cycle and a desorption cycle set based on the internal state of the adsorption tower, wherein the processor is configured to: output corresponding adsorption cycle and desorption cycle according to sensing data of the sensor unit using a trained artificial intelligence model; when the sensing data is within a preset optimal range, transmit a command to drive the adsorption tower according to the output adsorption cycle and desorption cycle to the driving unit; and if the sensing data exceeds the optimal range, transmit a command to execute an abnormal situation processing process according to preset exception adsorption cycle and exception desorption cycle to the driving unit.

## Description

### [BACKGROUND OF THE INVENTION]

### 1. Field of the Invention

The present disclosure relates to an ammonia adsorption tower driving control device and a control method using the same.

### 2. Description of the Related Art

Ammonia is one of substances that cause bad smells, and may be generated not only in livestock farms, but also in composting facilities, factories, sewage treatment plants, and the like, which use chemical fertilizers or chemical fibers.

Conventionally, ammonia is adsorbed and removed from air introduced into an adsorption tower by driving the adsorption tower, and when the adsorption is performed over a predetermined level to cause a reduction in the removal efficiency of the adsorption tower, the adsorption tower is controlled to maintain a state where adsorption is possible again by desorbing the ammonia.

In order to repeatedly perform the above-described processes, it is very important to control adsorption and desorption cycles so that the adsorption and desorption processes are performed in time. Conventionally, volatile organic compounds (VOCs) adsorbed on an adsorbent are desorbed using steam by a vapor recovery method, then the desorbed vapor and VOCs are recovered through a heat exchanger in order to be reused. In this case, a desorption time of the adsorbent is monitored using a temperature sensor provided in the adsorption tower.

However, even if the desorption time is detected or an occurrence of abnormality is output as the desorption time has expired, when an operator does not perform a process to resolve the abnormal state in time, the adsorption efficiency decreases. In addition, even if the operator responds in time, methods for responding to the abnormal state are different from one another depending on skill levels of the operators, such that the adsorption efficiency cannot be maintained consistently.

Further, even if an artificial intelligence model is used, the artificial intelligence model intended to output optimal adsorption and desorption cycles in accordance with the normal state repeatedly outputs incorrect prediction values in accordance with the abnormal state, which will cause the artificial intelligence model to perform erroneous training. As a result, it may also have an adverse effect on prediction of the adsorption and desorption cycles in the normal state.

### [SUMMARY OF THE INVENTION]

According to one aspect of the present disclosure, it is an object to provide an artificial intelligence-based ammonia adsorption tower driving control device and a control method using the same, in which an abnormal situation processing process according to the exception adsorption cycle and the exception desorption cycle may be executed when an abnormal state occurs regardless of the predicted adsorption and desorption cycles, and thereby contributing to environmental friendliness and producing clean energy.

To achieve the above mentioned object, according to an aspect of the present invention, there is provided an ammonia adsorption tower drive control device including: a sensor unit configured to measure an internal state of an adsorption tower; a memory configured to store one or more instructions; a processor configured to execute one or more instructions stored in the memory; and a driving unit configured to drive the adsorption tower according to an adsorption cycle and a desorption cycle set based on the internal state of the adsorption tower, wherein the processor is configured to: output corresponding adsorption cycle and desorption cycle according to sensing data of the sensor unit using a trained artificial intelligence model; when the sensing data is within a preset optimal range, transmit a command to drive the adsorption tower according to the output adsorption cycle and desorption cycle to the driving unit; and if the sensing data exceeds the optimal range, transmit a command to execute an abnormal situation processing process according to preset exception adsorption cycle and exception desorption cycle to the driving unit.

According to one embodiment, the exception adsorption cycle and the exception desorption cycle may be defined to be the shortest adsorption cycle and the longest desorption cycle within a settable cycle range of the driving unit.

According to one embodiment, when the processor transmits the command to execute an abnormal situation processing process to the driving unit, the command may include parameters according to at least one of: a minimum adsorption flow rate and a maximum desorption flow rate within a drivable range of the driving unit; a minimum adsorption temperature and a maximum desorption temperature within a drivable range of the driving unit; and a minimum adsorption pressure and a maximum desorption pressure within a drivable range of the driving unit.

According to one embodiment, the processor may be configured to perform repeatedly self-diagnose at a preset cycle whether the sensing data measured by the sensor unit deviate from the optimal range or whether patterns of previous sensing data and subsequent sensing data are different.

According to one embodiment, after driving the adsorption tower according to the abnormal situation processing process, when the sensing data measured by the sensor unit is within the optimal range, the processor may be configured to transmit a command to drive the adsorption tower using the adsorption cycle and desorption cycle output from the trained artificial intelligence model to the driving unit.

According to one embodiment, the processor may be configured to the following: if the previous adsorption cycle and previous desorption cycle performed before driving the adsorption tower according to the abnormal situation processing process are different from a next adsorption cycle and a next desorption cycle which will be used to drive the adsorption tower after the abnormal situation processing process ends, calculate costs and time reduction data when driving the adsorption tower by the driving unit using the next adsorption cycle and the next desorption cycle.

According to one embodiment, the processor may be configured to transmit a command to maintain the previous adsorption cycle and the previous desorption cycle to the driving unit, if the calculated costs and time reduction data do not exceed a preset threshold value.

According to one embodiment, sensing data in the abnormal state may be removed, and only sensing data in the normal state may be transmitted to the artificial intelligence model at each point in the process so that the abnormal state is detected by the artificial intelligence model.

According to one embodiment, the device may further include a user interface configured to provide an alarm to a user when an abnormal state occurs, and receive information on the abnormal situation processing process.

According to one embodiment, the sensor unit may include at least one sensor of a pressure sensor, a temperature sensor, a humidity sensor, a gas sensor and an adsorbent sensor, and the processor is configured to transmit a command to stop driving of the adsorption tower to the driving unit, if an occurrence of error in the at least one sensor is detected through self-diagnosis or a communication error between the at least one sensor and the processor is detected.

According to another aspect of the present invention, there is provided an ammonia adsorption tower operation control method executed by a computing device which includes a memory configured to store one or more instructions and a processor configured to execute the one or more instructions stored in the memory, the method including: collecting sensing data obtained by measuring an internal state of an adsorption tower; and driving the adsorption tower according to an adsorption cycle and a desorption cycle set based on the sensing data, wherein the step of driving the adsorption tower further includes: outputting corresponding adsorption cycles and desorption cycles according to the sensing data using a trained artificial intelligence model; transmitting a command to drive the adsorption tower according to the output adsorption cycle and desorption cycle to a driving unit of the adsorption tower, when the sensing data is within a preset optimal range; and transmitting a command to execute an abnormal situation processing process according to preset exception adsorption cycle and exception desorption cycle to the driving unit of the adsorption tower, if the sensing data exceeds the optimal range.

The present disclosure may maximize cost-effectiveness and adsorption efficiency by quickly restoring the internal state of the adsorption tower to a normal state by executing the abnormal situation processing process when an abnormal state occurs regardless of the predicted adsorption and desorption cycles.

In addition, the present disclosure may maximize adsorption efficiency through reductions in costs and time according to changes in driving conditions, by performing verification of the driving conditions before driving the adsorption tower according to the predicted adsorption and desorption cycles output by the artificial intelligence model so as to change the driving conditions depending on the costs occurring when changing the adsorption and desorption cycles and the operating performance efficiency to be improved.

According to embodiment of the present disclosure, the artificial intelligence model consists of a plurality of neural network layers.

According to embodiment of the present disclosure, each of the plurality of neural network layers has a plurality of weight values, performs neural network calculation through calculations between the calculation results of the previous layer and the plurality of weight values.

According to embodiment of the present disclosure, the plurality of weight values assigned to the plurality of neural network layers is be optimized by the learning results of the artificial intelligence model.

According to embodiment of the present disclosure, the neural network includes a deep neural network (DNN), preferably a convolutional neural network (CNN), deep neural network (DNN), recurrent neural network (RNN), restricted Boltzmann machine (RBM), deep belief network (DBN), bidirectional recurrent deep neural network (BRDNN), or Deep Q-Networks.

According to a further aspect of the present disclosure, a method to repeatedly perform processes of ammonia adsorption and ammonia desorption uses an ammonia adsorption tower, wherein ammonia is adsorbed and removed from air introduced into an adsorption tower by driving the adsorption tower, wherein the step of driving the adsorption tower comprises: outputting corresponding adsorption cycle and desorption cycle according to the sensing data using a trained artificial intelligence model; transmitting a command to drive the adsorption tower according to the output adsorption cycle and desorption cycle to a driving unit of the adsorption tower, when the sensing data is within a preset optimal range; and transmitting a command to execute an abnormal situation processing process according to preset exception adsorption cycle and exception desorption cycle to the driving unit of the adsorption tower, if the sensing data exceeds the optimal range.

According to a further embodiment of the present disclosure, the method to repeatedly perform processes of ammonia adsorption and ammonia desorption includes performing verification of the driving conditions before driving the adsorption tower according to the predicted adsorption and desorption cycles output by the artificial intelligence model so as to change the driving conditions.

According to a further embodiment of the method to repeatedly perform processes of ammonia adsorption and ammonia desorption, the artificial intelligence model is trained to distinguish normal state from abnormal state, wherein the abnormal state is defined by an exceptional pattern that deviates from the normal state, wherein the artificial intelligence model detects the difference from a learned pattern and execute the abnormal state processing process. The pattern may be selected from the group consisting of a temperature pattern, a pressure pattern, a humidity pattern, and a gas concentration pattern.

According to further embodiments of the method to repeatedly perform processes of ammonia adsorption and ammonia desorption, the ammonia adsorption tower drive control device and the tower operation control method disclosed herein may be used.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a conceptual diagram schematically illustrating an adsorption tower according to an embodiment of the present disclosure, and graphs illustrating changes in adsorption efficiency depending on changes in the temperature over time;
FIG. 2 is a block diagram schematically illustrating the configuration of an ammonia adsorption tower driving control device according to an embodiment of the present disclosure;
FIG. 3 is a flow chart illustrating procedures of an ammonia adsorption tower operation control method according to an embodiment of the present disclosure;
FIG. 4 is a flow chart illustrating specific procedures of the ammonia adsorption tower operation control method according to an embodiment of the present disclosure;
FIG. 5 is a flow chart illustrating procedures of the ammonia adsorption tower operation control method when an abnormal state occurs in the adsorption tower, according to an embodiment of the present disclosure; and
FIG. 6 is a block diagram illustrating a computing device according to an embodiment of the present disclosure.

### [DETAILED DESCRIPTION OF THE INVENTION]

Hereinafter, the present disclosure will be described in detail through embodiments with reference to the accompanying drawings. However, the embodiments are merely illustrative and the present disclosure is not limited to the specific embodiments described by way of example.

The same reference numerals are denoted to the same components throughout the present disclosure. The present disclosure does not describe all elements of the embodiments, and general contents in the technical field to which the present disclosure pertains or overlapping contents between the embodiments will not be described. The terms `unit, module, member and block' used herein may be implemented as software or hardware, and depending on the embodiments, a plurality of `units, modules, members and blocks' may be implemented as one component, or one 'part, module, member, or block' may include a plurality of components.

Throughout the specification, when the explanatory phrase a part is "connected" to another part is used, this includes not only the case where the part is "directly connected" to the other part, but also the case where the part is "indirectly connected" to the other part, and the indirect connection includes connection through a wireless communication network.

In addition, when the explanatory phrase a part "comprises or includes" a component is used, this means that the part may further include the component without excluding other components, unless there is a description opposite thereto.

Throughout the specification, when the explanatory phrase a member is located "on" another member is used, this includes not only the case where the member is in contact with the other member, but also the case where another member exists between the two members.

Terms such as first and second, etc. are used to distinguish one component from another component, and the components are not limited by the above-described terms.

The singular forms "a," "an" and "the" are intended to include the plural forms as well, unless the context clearly indicates otherwise.

The identification numerals for each step is used for the convenience of description. The identification numerals do not describe the order of each step, and each step may be performed differently from the specified order unless a specific order is clearly described in the context.

In this specification, the 'device according to the present disclosure' includes all various devices that can perform computational processing and provide results thereof to a user. For example, the device according to the present disclosure may include all of a computer, a server device and a portable terminal, or may be any form thereof.

Here, the computer may include, for example, a laptop or desktop computer, laptop PC, tablet PC, slate PC, etc. equipped with a web browser.

The server device is a server that processes information by performing communication with an external device, and may include an application server, computing server, database server, file server, game server, mail server, proxy server and web server.

The portable terminal is, for example, a wireless communication device with which portability and mobility are assured, and may include: all types of handheld wireless communication devices such as a personal communication system (PCS), global system for mobile communications (GSM), personal digital cellular (PDC), personal digital assistant (PDA), international mobile telecommunication (IMT)-2000, code division multiple access (CDMA)-2000, wideband code division multiple access (W-CDMA), wireless broadband internet (WiBro) terminal, and smart phone, etc.; and wearable devices such as a watch, ring, bracelet, anklet, necklace, glasses, contact lenses, and head-mounted-device (HMD), etc.

Functions related to artificial intelligence according to the present disclosure are operated through a processor and a memory. The processor may include one or a plurality of processors. In this case, the one or plurality of processors may be general-purpose processors such as a CPU, AP, or digital signal processor (DSP), etc., dedicated graphics processors such as a GPU or vision processing unit (VPU), etc., or dedicated artificial intelligence processors such as an NPU. The one or plurality of processors control to process input data according to predefined operation rules or artificial intelligence models stored in the memory. Alternatively, when the one or plurality of processors are dedicated artificial intelligence processors, the artificial intelligence dedicated processors may be designed with a hardware structure specialized for processing a specific artificial intelligence model.

The predefined operation rule or artificial intelligence model are characterized by being generated or trained through learning. As used herein, the expression "being generated or trained through learning" means that the basic artificial intelligence model is trained using a large number of learning data by a learning algorithm, thereby generating a predefined operation rule or artificial intelligence model set to perform the desired characteristics (or purposes). This learning may be accomplished in the device itself on which the artificial intelligence is performed according to the present disclosure, or may be accomplished through a separate server and/or system. Examples of learning algorithms include supervised learning, unsupervised learning, semi-supervised learning, or reinforcement learning, but they are not limited to the above-described examples.

The artificial intelligence model may consist of a plurality of neural network layers. Each of the plurality of neural network layers has a plurality of weight values, performs neural network calculation through calculations between the calculation results of the previous layer and the plurality of weight values. The plurality of weight values assigned to the plurality of neural network layers may be optimized by the learning results of the artificial intelligence model. For example, the plurality of weight values may be updated so that loss or cost values obtained from the artificial intelligence model are reduced or minimized during the learning process. The artificial neural network may include a deep neural network (DNN) such as a convolutional neural network (CNN), deep neural network (DNN), recurrent neural network (RNN), restricted Boltzmann machine (RBM), deep belief network (DBN), bidirectional recurrent deep neural network (BRDNN), or Deep Q-Networks, etc., but it is not limited to the above-described examples.

According to an exemplary embodiment of the present disclosure, the processor may implement artificial intelligence. As used herein, the artificial intelligence refers to a machine learning method based on an artificial neural network which causes the machine to perform learning by imitating human biological neurons. Methodology of artificial intelligence may be divided, according to the learning method, into: supervised learning in which the answer (output data) to the question (input data) is defined by providing input data and output data together as training data; unsupervised learning in which the answer (output data) to the question (input data) is not determined by providing only input data without output data; and reinforcement learning in which a reward is given from an external environment whenever any action is taken in the current state, and training is performed in a direction of maximizing this reward. In addition, the methodology of artificial intelligence may be divided according to an architecture which is the structure of learning model. The architecture of widely used deep learning technology may be divided into a convolutional neural network (CNN), recurrent neural network (RNN), transformer, or generative adversarial networks (GAN), etc.

The device and system of the present disclosure may include artificial intelligence models. The artificial intelligence model may be implemented as a single artificial intelligence model or a plurality of artificial intelligence models. The artificial intelligence model may consist of neural networks (or artificial neural networks),and may include statistical learning algorithms which mimic biological neurons in machine learning and cognitive science. The neural network may refer to an overall model in which artificial neurons (nodes) forming a network through the combination of synapses change the coupling strength of the synapses through learning to have problem solving skills. Neurons in the neural network may include the combination of weight values or biases. The neural network may include one or more layers consisting of one or more neurons or nodes. As an example, the device may include an input layer, a hidden layer and an output layer. The neural network consisting of the device may infer the result (output) to be predicted from arbitrary input (input) by changing the weight values of neurons through learning.

The processor may generate a neural network, cause the neural network to perform training through learning, perform calculation based on the received input data, generate information signals based on the execution results, or cause the neural network to perform retraining. Models of the neural network may include various types of models such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, and the like, but it is not limited thereto. The processor may include one or more processors to perform calculations according to models of the neural network. For example, the neural network may include a deep neural network.

The neural network may include the convolutional neural network (CNN), recurrent neural network (RNN), perceptron, multilayer perceptron, feed forward (FF), radial basis network (RBF), deep feed forward (DFF), long short term memory (LSTM), gated recurrent unit (GRU), auto encoder (AE), variational auto encoder (VAE), denoising auto encoder (DAE), sparse auto encoder (SAE), Markov chain (MC), Hopfield network (HN), Boltzmann machine (BM), restricted Boltzmann machine (RBM), deep belief network (DBN), deep convolutional network (DCN), deconvolutional network (DN), deep convolutional inverse graphics network (DCIGN), generative adversarial network (GAN), liquid state machine (LSM), extreme learning machine (ELM), echo state network (ESN), deep residual network (DRN), differential neural computer (DNC), neural turning machine (NTM), capsule network (CN), Kohonen network (KN) and attention network (AN), but it is not limited thereto. Those skilled in the art will understand that it may include any neural network.

According to an exemplary embodiment of the present disclosure, the processor may include various artificial intelligence structures and algorithms such as GoogleNet, AlexNet, VGG Network, etc., for example, convolution neural network (CNN), region with convolution neural network (R-CNN), region proposal network (RPN), recurrent neural network (RNN), stacking-based deep neural network (S-DNN) state-space dynamic neural network (S-SDNN), deconvolution network, deep belief network (DBN), restricted Boltzmann machine (RBM), fully convolutional network (FCN), long short-term memory (LSTM) network, classification network, generative modeling, eXplainable AI, Continual AI, representation learning, AI for material design, BERT for natural language processing, SP-BERT, MRC/QA, Text Analysis, Dialog System, GPT-3, GPT-4, Visual Analytics for vision processing, Visual Understanding, Video Synthesis, Anomaly Detection for ResNet data intelligence, Prediction, Time-Series Forecasting, Optimization, Recommendation, Data Creation, and the like, but it is not limited thereto.

Hereinafter, embodiments of the present disclosure will be described in detail with reference to the accompanying drawings.

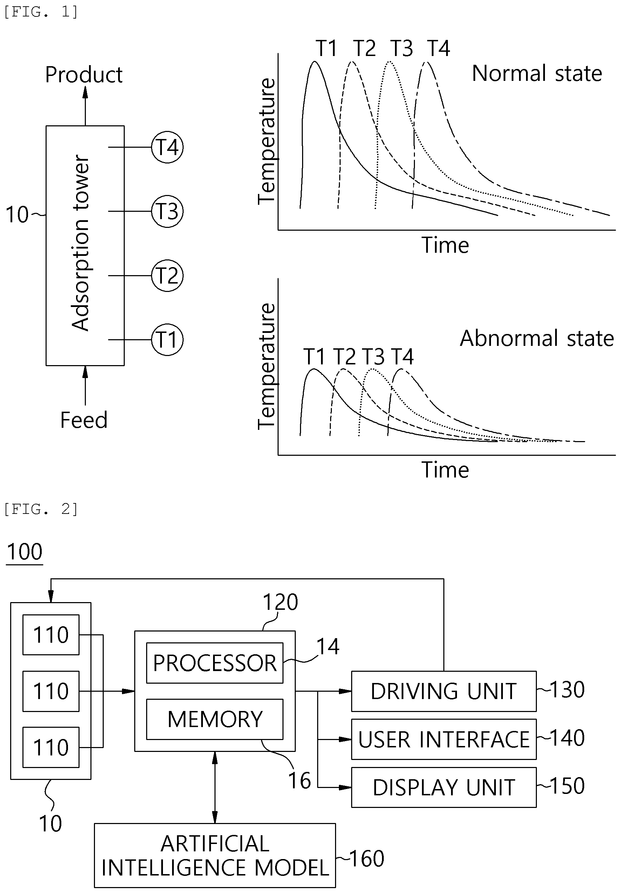

FIG. 1 is a conceptual diagram schematically illustrating an adsorption tower 10 according to an embodiment of the present disclosure, and graphs illustrating changes in adsorption efficiency depending on changes in the temperature over time. Hereinafter, the above-described artificial intelligence-based ammonia adsorption tower driving control device and control method using the same will be described in detail with reference to FIGS. 2 to 5.

As shown in FIG. 1, the adsorption tower 10 may receive air (feed) containing ammonia, volatile organic compounds (VOCs), etc., and discharge air (product) from which the ammonia and volatile organic compounds (VOCs) have been removed by applying a vapor recovery method such as recompression, condensation, and activated carbon adsorption while passing from T1 to T4.

The adsorption tower 10 may have regions T1, T2, T3 and T4 classified from a location close to an inlet port into which the feed is input to a location of an outlet port from which the product is discharged, and may include sensor units (110, see FIG. 2) installed in each classified region. The sensor unit 110 may include at least one of a pressure sensor for measuring an internal pressure of the adsorption tower 10, a temperature sensor for measuring an internal temperature of the adsorption tower 10, a humidity sensor for measuring an internal humidity of the adsorption tower 10, a gas sensor for measuring a gas component inside the adsorption tower 10 to determine a purity of the extracted hydrogen, and an adsorbent sensor.

It is possible to determine whether the pressure or temperature is controlled within a predetermined range to maintain adsorption efficiency using the sensor unit 110, and calculate result values regarding hydrogen extraction efficiency using the detected humidity or hydrogen purity.

In addition, the adsorbent sensor of the sensor unit 110 may measure the state of the adsorbent inside the adsorption tower, evaluate the life-span and performance of the adsorbent, and obtain information capable of predicting the replacement time of the adsorbent.

As shown in FIG. 1, the temperature is increased as adsorption is activated, but as the adsorption efficiency is decreased and the replacement time of the adsorbent approaches, the range of increase in the temperature is decreased. Thus, it is possible to grasp a change in the state of the adsorbent depending on the amount of change in temperature.

In this case, it can be seen that the contact time with the feed is delayed toward T4 from T1, such that the adsorbent replacement time occurs later than T1, and that all the adsorbent replacement times of T1 to T4 do not occur at the same time.

In addition, when an abnormal state occurs, the range of change in the internal temperature of the adsorption tower 10 is decreased even though the adsorbent replacement time has not yet arrived, which may lead to a misconception that the replacement time of the adsorbent has arrived.

Therefore, an artificial intelligence-based ammonia adsorption tower driving control device 100 according to an embodiment of the present disclosure may include, as shown in FIG. 2, the sensor unit 110 configured to measure an internal state of the adsorption tower 10, a memory 16 configured to store one or more instructions, a processor 14 configured to execute one or more instructions stored in the memory 16, and a driving unit 130 configured to drive the adsorption tower 10 according to the adsorption cycle and desorption cycle set based on the internal state of the adsorption tower 10.

The sensor units 110 may be disposed at the regions T1 to T4 inside of the adsorption tower 10, respectively.

As an example, the inside of the adsorption tower 10 is separated and partitioned into a plurality of beds, and the sensor units 110 may be installed respectively in the separated and partitioned beds.

As another example, a plurality of adsorption towers 10 are connected, and the sensor units 110 may be installed respectively in each of the adsorption towers 10.

In other words, the sensor units 110 may be installed for each divided space in at least one adsorption tower 10 separated into individual spaces by dividing one adsorption tower 10 into a plurality of beds or connecting a plurality of adsorption towers 10, etc.

The processor 14 and the memory 16 may be disposed together or separately in one or more computing devices 120 (as illustrated in Fig. 2). Driving of the adsorption tower 10 may be controlled using the computing device 120 so as to be driven while the efficiency of the adsorption tower 10 is maintained at a predetermined level or higher.

The artificial intelligence model 160 may be disposed in the computing device 120 together or connected thereto through a separate server or cloud.

In addition, the artificial intelligence-based ammonia adsorption tower driving control device 100 according to an embodiment of the present disclosure may further include a user interface 140 to receive user input for driving the adsorption tower 10 (as illustrated in Fig. 2).

The user interface 140 may provide an alarm to the user when an abnormal state occurs, and receive information on the abnormal situation processing process.

In addition, the artificial intelligence-based ammonia adsorption tower driving control device 100 according to an embodiment of the present disclosure may further include a display unit 150 (as illustrated in Fig. 2) configured to provide an alarm for driving the adsorption tower 10 or monitor an operation status of the adsorption tower 10 in real time, and display the monitoring results.

In one embodiment, the processor 14 may be configured to: output the corresponding adsorption cycle and desorption cycle according to the sensing data of the sensor unit 110 using the trained artificial intelligence model 160; when the sensing data is within a preset optimal range, transmit a command to drive the adsorption tower according to the output adsorption cycle and desorption cycle to the driving unit 130; and if the sensing data exceeds the optimal range, transmit a command to execute the abnormal situation processing process according to the preset exception adsorption cycle and exception desorption cycle to the driving unit 130.

The artificial intelligence-based ammonia adsorption tower driving control device 100 may identify the abnormal state based on data collected from the sensor units 110, and when an abnormal state occurs, detect the abnormal state in real time using the artificial intelligence model 160 trained the normal state for the pressure, temperature, humidity, concentration of the gas, and other conditions, in the adsorption tower 10 at each point in the adsorption process.

The processor 14 of the artificial intelligence-based ammonia adsorption tower driving control device 100 may repeatedly self-diagnose at a preset cycle whether the sensing data measured by the sensor unit 110 deviates from the optimal range or whether patterns of previous sensing data and subsequent sensing data are different, and when an abnormal state occurs, detect the abnormal state in real time using the artificial intelligence model 160.

In addition, when performing self-diagnosis, the processor 14 may not only detect an abnormal state inside the adsorption tower 10, but also sense a sensor error in at least one sensor of the sensor unit 110, or detect a communication error between the sensor unit 110 and the processor 14, and when a sensor error or communication error is detected, transmit a command to stop the driving of the adsorption tower 10 to the driving unit 130.

As an example, when it is identified as a normal state, the processor 14 may execute the adsorption process with optimal efficiency using the adsorption cycle and desorption cycle output by the artificial intelligence model 160. As used herein, the optimal efficiency means a state where adsorption efficiency of a predetermined level or more can be maintained while reducing costs by delaying the replacement time of the adsorbent as much as possible.

As an example, when it is identified as a normal state, the processor 14 may not execute the adsorption process at the adsorption cycle and desorption cycle output by the artificial intelligence model 160, but operate a preset abnormal situation processing process to periodically transmit a command to drive the adsorption tower 10 at adsorption and desorption cycles that allow the fastest recovery to the normal state.

Here, the adsorption and desorption cycles that allow the fastest recovery to the normal state are preset exception adsorption cycle and exception desorption cycle, and the exception adsorption cycle and the exception desorption cycle may be the shortest adsorption cycle and the longest desorption cycle within a settable cycle range of the driving unit 130.

Alternatively, when the processor 14 transmits a command to execute the abnormal situation processing process to the driving unit 130, the command may include parameters according to at least one of a minimum adsorption flow rate and a maximum desorption flow rate, or a minimum adsorption temperature and a maximum desorption temperature, or a minimum adsorption pressure and a maximum desorption pressure within a drivable range of the driving unit 130, respectively.

Specifically, the processor 14 may transmit an exception parameter corresponding to an abnormal situation other than the exception adsorption cycle and the exception desorption cycle to the driving unit 130. The processor 14 may transmit the minimum adsorption flow rate and maximum desorption flow rate within the drivable range of the driving unit 130, thus to measure or calculate a minimum adsorption flow rate that can be processed when maintaining an optimal adsorption efficiency before the adsorbent reaches the replacement cycle, and measure or calculate a maximum desorption flow rate that can be processed when maintaining the optimal adsorption efficiency before the adsorbent reaches the replacement cycle.

Alternatively, the processor 14 may transmit the minimum adsorption temperature and maximum desorption temperature, or the minimum adsorption pressure and maximum desorption pressure within the drivable range of the driving unit 130, thus to measure or calculate a minimum adsorption temperature or pressure that is generated when maintaining the optimal adsorption efficiency before the adsorbent reaches the replacement cycle, and measure or calculate a maximum desorption temperature or pressure that is generated when maintaining the optimal adsorption efficiency before the adsorbent reaches the replacement cycle.

In this case, the adsorption cycle and desorption cycle output by the artificial intelligence model 160 may be stored separately so that they can be used when recovering to the normal state later.

As an example, after identifying an abnormal state and driving the adsorption tower 10 according to the abnormal situation processing process, when the sensing data measured by the sensor unit 110 is within the optimal range again, the adsorption tower 10 may be driven using the adsorption cycle and desorption cycle output from the trained artificial intelligence model 160.

In this case, it is possible to output the adsorption cycle and desorption cycle by operating the artificial intelligence model 160 again, or read and use the adsorption cycle and desorption cycle output by the artificial intelligence model 160 separately stored in advance.

Therefore, the artificial intelligence-based ammonia adsorption tower driving control device 100 may identify normal and abnormal states in advance, and control the driving of the adsorption tower 10 to execute a separate adsorption process based on the identified state.

Meanwhile, it may be configured in a way that, if the previous adsorption cycle and previous desorption cycle performed before driving the adsorption tower 10 according to the abnormal situation processing process are different from a next adsorption cycle and a next desorption cycle which will be used to drive the adsorption tower after the abnormal situation processing process ends, the processor 14 of the artificial intelligence-based ammonia adsorption tower driving control device may calculate costs and time reduction data when driving the adsorption tower by the driving unit using the next adsorption cycle and the next desorption cycle.

Specifically, when there are an adsorption-desorption cycle P1 used to drive the adsorption tower 10 before identifying the abnormal state, an exception adsorption-desorption cycle P2, and an adsorption-desorption cycle P2 output again by the artificial intelligence model 160 after returning to the normal state, the processor 14 may execute the adsorption process after finally verifying the adsorption process according to the periods P1 and P2, rather than immediately executing the adsorption process using the cycle P2.

For example, it is possible to calculate and compare costs and operating performance efficiency to be improved occurring when changing the driving condition of the adsorption tower 10 from the cycle P1 to the cycle P2, and then change the adsorption and desorption cycles.

In other words, it is possible to control the adsorption tower 10 to change the adsorption and desorption cycles only when there are cost reduction and efficiency increase effects greater than a preset threshold value by comparing the calculated costs and efficiency expected to be obtained by changing the adsorption and desorption cycles with the costs and efficiency of the current adsorption and desorption cycles.

It is possible to control the adsorption tower 10 by reflecting the comprehensive driving situation of the adsorption tower 10 in consideration of losses due to frequent changes in the adsorption and desorption cycles and process delays during the cycle change process.

Therefore, the processor 14 of the artificial intelligence-based ammonia adsorption tower driving control device 100 may transmit a command to maintain the previous adsorption cycle and the previous desorption cycle to the driving unit 130, if the calculated costs and time reduction data do not exceed the preset threshold value.

The processor 14 of the artificial intelligence-based ammonia adsorption tower driving control device 100 may transmit driving data for the adsorption tower 10 as learning data of the artificial intelligence model 160. In this case, sensing data in the abnormal state may be removed and only sensing data in the normal state may be transmitted to the artificial intelligence model at each point in the process so that the abnormal state is detected by the artificial intelligence model 160.

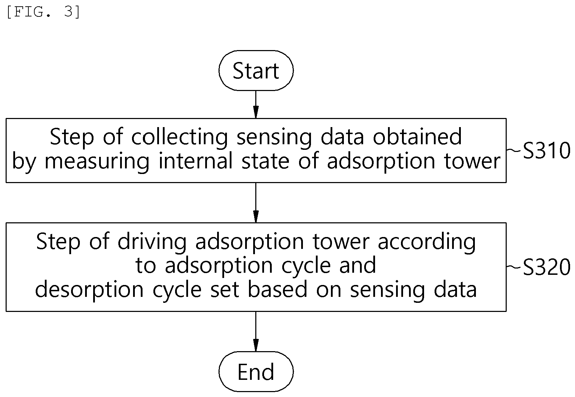

Meanwhile, as shown in FIG. 3, a control method using the artificial intelligence-based ammonia adsorption tower driving control device 100 may include the steps of: collecting sensing data obtained by measuring an internal state of the adsorption tower 10 (S310); and driving the adsorption tower 10 according to the adsorption cycle and desorption cycle set based on the sensing data (S320).

The step of driving the adsorption tower 10 may further include the steps of: outputting corresponding adsorption cycle and desorption cycle according to the sensing data using the trained artificial intelligence model 160; transmitting a command to drive the adsorption tower 10 according to the adsorption cycle and desorption cycle output when the sensing data is within a preset optimal range to the driving unit 130; and transmitting a command to execute the abnormal situation processing process according to the preset exception adsorption cycle and exception desorption cycle if the sensing data exceeds the optimal range to the driving unit 130.

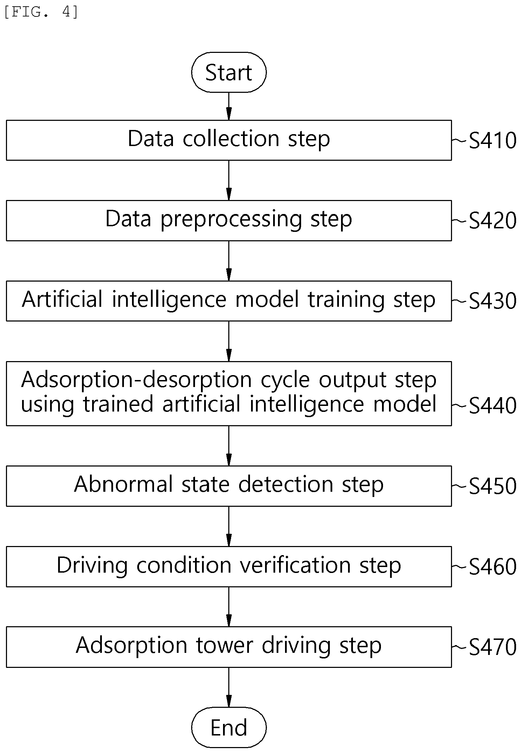

Specifically, as shown in FIG. 4, the sensing data regarding the internal state of the adsorption tower 10 may be collected through the sensor unit 110 in a data collection step (S410). Then, in a data preprocessing step (S420), the sensing data may be subjected to preprocessing such as data normalization, processing of missing values, and removing abnormal values measured in the abnormal state.

In an artificial intelligence model training step (S430), the artificial intelligence model 160 may be trained using the preprocessed data to generate a model configured to predict an optimal driving condition of the adsorption tower 10. The artificial intelligence model 160 may be trained to output optimal adsorption and desorption cycles corresponding to the sensing data using a machine learning or deep learning algorithm, and in particular, may be trained to output optimal adsorption and desorption cycles in consideration of the adsorbent replacement cycle and costs, optimal adsorption efficiency, each process time and gas purity required to maintain the optimal adsorption efficiency.

Once training is completed, the optimal adsorption and desorption cycles corresponding to the current internal state of the adsorption tower 10 may be output in an adsorption-desorption cycle output step (S440) using the trained artificial intelligence model 160.

Then, an abnormal state detection step (S450) may be performed without immediately executing the adsorption and desorption processes at the predicted adsorption and desorption cycles, and if an abnormal state is not detected, a driving condition verification step (S460) may be performed.

In the abnormal state detection step (S450), using the artificial intelligence model 160, the processor may determine whether the parameters detected by the sensor unit deviate from the expected temperature, humidity, or pressure range according to the current amount of adsorbent and the progress of the internal process of the adsorption tower 10, determine a difference between the predicted value to be expected and the current actual value, and then, if it is determined that the difference is greater than the threshold value, identify as an abnormal state and provide an alarm to the display unit 150.

After determining the difference between the predicted value to be expected and the current actual value, if it is determined that the difference is less than the threshold value and does not deviate from the normal state range, in the driving condition verification step (S460), the processor may determine whether to maintain or change the existing adsorption and desorption cycles based on the amount of adsorbent, amount of energy, application time for each step, etc. required for gas production.

Finally, when the driving condition verification is completed, an adsorption tower driving step (S470) may be performed to drive the adsorption tower 10 at the determined adsorption and desorption cycles.

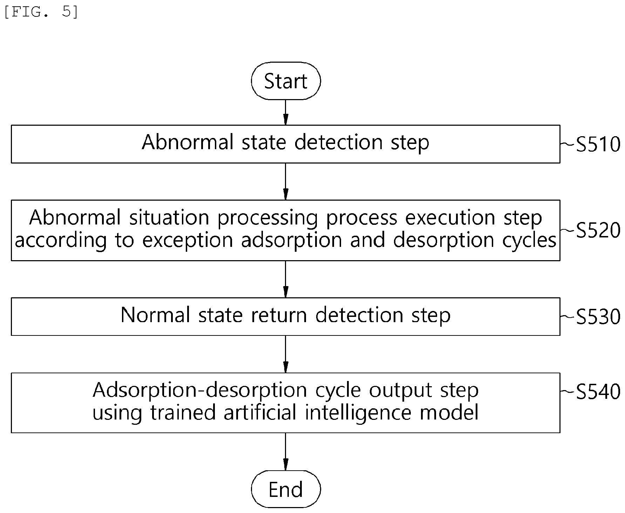

Alternately, as shown in FIG. 5, if an abnormal state is identified in an abnormal state detection step (S510), an abnormal situation processing process execution step (S520) according to the exception adsorption and desorption cycles may be performed. The abnormal state detection step (S510) is the same step as S410 described above.

In the abnormal situation processing process execution step (S520), the adsorption and desorption processes may be executed according to the preset exception adsorption cycle and exception desorption cycle so as to return the internal state of the adsorption tower 10 to the normal state as quickly as possible.

Thereafter, in a normal state return detection step (S530), the adsorption and desorption processes may be executed according to the exception adsorption cycle and the exception desorption cycle, and when the sensing data measured by the sensor unit 110 enters the normal state range by performing self-diagnosis, the processor may detect returning to the normal state, then may perform an adsorption-desorption cycle output step (S540) using the trained artificial intelligence model 160. The adsorption-desorption cycle output step (S540) using the trained artificial intelligence model 160 is the same step as S440 described above. After S540, steps S450, S460 and S470 may be performed consecutively.

In addition, after driving the adsorption tower 10 according to the output adsorption cycle and desorption cycle, if the actual process result measured by the sensor unit 110 exceeds the predicted process result and the preset range, the processor 14 of the artificial intelligence-based ammonia adsorption tower driving control device 100 may transmit a command to execute the abnormal situation processing process according to the exception adsorption cycle and the exception desorption cycle to the driving unit 130.

Alternatively, after driving the adsorption tower 10 according to the output adsorption cycle and desorption cycle, if the actual process result measured by the sensor unit 110 exceeds the predicted process result and the preset range, the processor 14 of the artificial intelligence-based ammonia adsorption tower driving control device 100 may transmit a command to cause the artificial intelligence model 160 to perform retraining.

If the sensing data of the sensor unit 110 do not deviate from the normal range but the adsorption efficiency is not improved as expected, the abnormal situation processing process may be driven to reset the internal state of the adsorption tower 10 once, or may cause the artificial intelligence model 160 to perform retraining so as to eliminate the possibility of erroneous training.

As another embodiment, the processor 14 of the artificial intelligence-based ammonia adsorption tower driving control device 100 may determine whether an abnormal state is temporary or permanent, and apply a different abnormal situation processing process depending on the abnormal state.

When a temporary mismeasurement of the sensor unit 110 or a communication network failure occurs due to external factors, since it is a temporary abnormal state, the adsorption and desorption processes may be executed using the preset exception adsorption and desorption cycles.

If the abnormal state is caused by a malfunction of the sensor unit 110 or a communication error between at least one sensor 110 and the processor 14 due to a malfunction of the communication unit, since the abnormal state is a permanent abnormal state that cannot be resolved unless repaired from an outside, driving of the adsorption tower 10 may be stopped.

Alternatively, in the case of the permanent abnormal state, an average value of the output adsorption and desorption cycles stored in the memory 16 may be calculated, and the adsorption and desorption processes may be executed according to the calculated adsorption and desorption cycles. In order to prevent an occurrence of costs and losses while waiting for the abnormal state to be resolved, the adsorption tower 10 may be driven at an arbitrary efficiency.

In another embodiment, when the abnormal state is an exceptional pattern that deviates from the normal state, it may cause the artificial intelligence model 160 to perform training by patterning the parameters measured in the normal state, for example, the changes in the internal temperature of the adsorption tower 10, and detect an abnormal state if the pattern is changed.

As shown in FIG. 1, if the temperature pattern shown in the abnormal state is different from the normal state, it may cause the artificial intelligence model 160 to detect the difference from the learned pattern and execute the abnormal situation processing process. In this case, the pattern may include a temperature pattern, pressure pattern, humidity pattern, and gas concentration pattern.

Through this, the desorption process is performed in time to enable continuous use of the adsorbent while the efficiency of the adsorption tower 10 is maintained at a predetermined level or more, such that the adsorption tower 10 can be stably driven not only in the normal state but also in the abnormal state.

In addition, by driving adsorption tower 10 in consideration of the costs and adsorption efficiency through simulation before and after control of the adsorption and desorption cycles, cost reduction and optimal adsorption efficiency may be maintained for a long period of time.

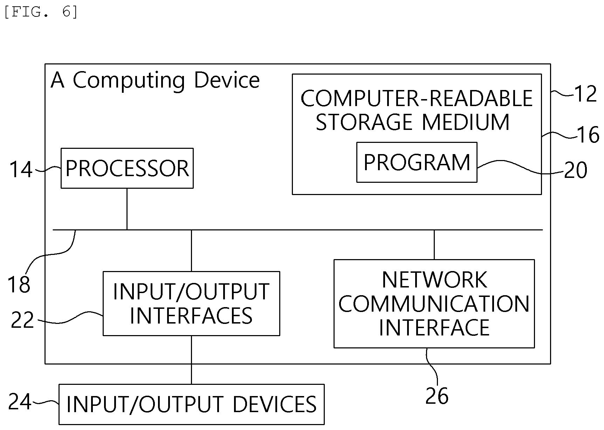

Meanwhile, as shown in FIG. 6, the artificial intelligence-based ammonia adsorption tower driving control device 100 according to the present disclosure may be implemented in the form of a recording medium which stores instructions executable by a computer. The instructions may be stored in the form of program code, and when executed by the processor, may generate a program module to perform operations of the disclosed embodiments. The recording medium may be implemented as a computer-readable recording medium.

The artificial intelligence-based ammonia adsorption tower driving control device according to the present disclosure may correspond to a computing device 12, and the computing device 12 may include at least one processor 14, a computer-readable storage medium (memory) 16 including a program 20 and a communication bus 18. In addition, the computing device 12 may include one or more input/output interfaces 22 which provide interfaces for input/output devices 24 and one or more network communication interfaces 26.

The computing device 120 of the present disclosure may correspond to the computing device 12. The user interface 140 and the display unit 150 of the present disclosure may correspond to one or more input/output interfaces 22 which provide interfaces for the input/output devices 24. Therefore, all the respective components of the artificial intelligence-based ammonia adsorption tower driving control device 100 according to the present disclosure may be included in the above-described single computing device 12 or each component thereof may be implemented in separate devices.

As above, the disclosed embodiments have been described with reference to the accompanying drawings. It will be understood by persons skilled in the art to which the present disclosure pertains that the present disclosure may be embodied in forms different from the disclosed embodiments without changing the technical idea or essential features of the present disclosure. The disclosed embodiments are illustrative, and should not be interpreted as limiting.

The invention is defined by the appended claims.

## Claims

1. An ammonia adsorption tower drive control device comprising:
a sensor unit (110) configured to measure an internal state of an adsorption tower (10);
a memory (16) configured to store one or more instructions;
a processor (14) configured to execute one or more instructions stored in the memory (16); and
a driving unit (130) configured to drive the adsorption tower (10) according to an adsorption cycle and a desorption cycle set based on the internal state of the adsorption tower (10),
wherein the processor (14) is configured to:
output corresponding adsorption cycle and desorption cycle according to sensing data of the sensor unit (110) using a trained artificial intelligence model (160);
when the sensing data is within a preset optimal range, transmit a command to drive the adsorption tower (10) according to the output adsorption cycle and desorption cycle to the driving unit (130); and
if the sensing data exceeds the optimal range, transmit a command to execute an abnormal situation processing process according to preset exception adsorption cycle and exception desorption cycle to the driving unit (130).

2. The ammonia adsorption tower driving control device according to claim 1, wherein the exception adsorption cycle and the exception desorption cycle are defined to be the shortest adsorption cycle and the longest desorption cycle within a settable cycle range of the driving unit (130).

3. The ammonia adsorption tower driving control device according to claim 2, wherein, when the processor (14) is configured to transmit the command to execute an abnormal situation processing process to the driving unit (130), the command includes parameters according to at least one of:
a minimum adsorption flow rate and a maximum desorption flow rate within a drivable range of the driving unit (130);
a minimum adsorption temperature and a maximum desorption temperature within a drivable range of the driving unit (130); and
a minimum adsorption pressure and a maximum desorption pressure within a drivable range of the driving unit (130).

4. The ammonia adsorption tower driving control device according to any one of claims 1 to 3, wherein the processor (14) is configured to perform repeatedly self-diagnose at a preset cycle whether the sensing data measured by the sensor unit (110) deviate from the optimal range or whether patterns of previous sensing data and subsequent sensing data are different.

5. The ammonia adsorption tower driving control device according to any one of claims 1 to 4, wherein, after driving the adsorption tower (10) according to the abnormal situation processing process, when the sensing data measured by the sensor unit (110) is within the optimal range, the processor (14) is configured to transmit a command to drive the adsorption tower (10) using the adsorption cycle and desorption cycle output from the trained artificial intelligence model (160) to the driving unit (130).

6. The ammonia adsorption tower driving control device according to any one of claims 1 to 5, wherein the processor (14) is configured to:
if the previous adsorption cycle and previous desorption cycle performed before driving the adsorption tower (10) according to the abnormal situation processing process are different from a next adsorption cycle and a next desorption cycle which will be used to drive the adsorption tower (10) after the abnormal situation processing process ends,
calculate costs and time reduction data when driving the adsorption tower (10) by the driving unit (130) using the next adsorption cycle and the next desorption cycle.

7. The ammonia adsorption tower driving control device according to claim 6, wherein the processor (14) is configured to transmit a command to maintain the previous adsorption cycle and the previous desorption cycle to the driving unit (130), if the calculated costs and time reduction data do not exceed a preset threshold value.

8. The ammonia adsorption tower driving control device according to any one of claims 1 to 7, configured to remove sensing data in the abnormal state and to only transmit sensing data in the normal state to the artificial intelligence model (160) at each point in the process so that the abnormal state is detected by the artificial intelligence model (160).

9. The ammonia adsorption tower driving control device according to any one of claims 1 to 8, further comprising a user interface (140) configured to provide an alarm to a user when an abnormal state occurs, and configured to receive information on the abnormal situation processing process.

10. The ammonia adsorption tower driving control device according to claim 4, wherein the sensor unit (110) includes at least one sensor of a pressure sensor, a temperature sensor, a humidity sensor, a gas sensor and an adsorbent sensor, and
the processor (14) is configured to transmit a command to stop driving of the adsorption tower (10) to the driving unit (130), if an occurrence of error in the at least one sensor is detected through self-diagnosis or a communication error between the at least one sensor and the processor (14) is detected.

11. An ammonia adsorption tower operation control method executed by a computing device (12, 120) which comprises a memory (16) configured to store one or more instructions and a processor (14) configured to execute the one or more instructions stored in the memory (16), the method comprising:
collecting sensing data obtained by measuring an internal state of an adsorption tower (10); and
driving the adsorption tower (10) according to an adsorption cycle and a desorption cycle set based on the sensing data,
wherein the step of driving the adsorption tower (10) further comprises:
outputting corresponding adsorption cycle and desorption cycle according to the sensing data using a trained artificial intelligence model (160);
transmitting a command to drive the adsorption tower (10) according to the output adsorption cycle and desorption cycle to a driving unit (130) of the adsorption tower (10), when the sensing data is within a preset optimal range; and
transmitting a command to execute an abnormal situation processing process according to preset exception adsorption cycle and exception desorption cycle to the driving unit (130) of the adsorption tower (10), if the sensing data exceeds the optimal range.

12. An ammonia adsorption tower operation control method according to claim 11, wherein the artificial intelligence model consists of a plurality of neural network layers, wherein each of the plurality of neural network layers has a plurality of weight values, performs neural network calculation through calculations between the calculation results of the previous layer and the plurality of weight values,
preferably wherein the plurality of weight values assigned to the plurality of neural network layers is optimized by the learning results of the artificial intelligence model.

13. A method to repeatedly perform processes of ammonia adsorption and ammonia desorption using an ammonia adsorption tower, wherein ammonia is adsorbed and removed from air introduced into an adsorption tower by driving the adsorption tower,
wherein the step of driving the adsorption tower comprises:
outputting corresponding adsorption cycle and desorption cycle according to the sensing data using a trained artificial intelligence model (160);
transmitting a command to drive the adsorption tower (10) according to the output adsorption cycle and desorption cycle to a driving unit (130) of the adsorption tower (10), when the sensing data is within a preset optimal range; and
transmitting a command to execute an abnormal situation processing process according to preset exception adsorption cycle and exception desorption cycle to the driving unit (130) of the adsorption tower (10), if the sensing data exceeds the optimal range.

14. The method according to claim 13, which includes performing verification of the driving conditions before driving the adsorption tower according to the predicted adsorption and desorption cycles output by the artificial intelligence model (160) so as to change the driving conditions.

15. The method according to claim 13 or 14, wherein the artificial intelligence model (160) is trained to distinguish normal state from abnormal state, wherein the abnormal state is defined by an exceptional pattern that deviates from the normal state, wherein the artificial intelligence model (160) detects the difference from a learned pattern and execute the abnormal state processing process,
preferably wherein the pattern is selected from the group consisting of a temperature pattern, a pressure pattern, a humidity pattern, and a gas concentration pattern.
